# NEUE EUROPÄISCHE PATENTSCHRIFT

(11) **EP 0 912 282 B2**
(45) Veröffentlichungstag und Bekanntmachung des Hinweises auf die Entscheidung über den Einspruch: **24.10.2007**
(45) Hinweis auf die Patenterteilung: 30.01.2002
(21) Anmeldenummer: 97930457.3
(22) Anmeldetag: 01.07.1997
(51) Int. Cl.: B23C 3/06

(54) **MEHRFACHFRÄSEN AN KURBELWELLEN**
MULTIPLE MILLING OF CRANKSHAFTS
FRAISAGES MULTIPLES SUR VILEBREQUINS

(30) Priorität: 02.07.1996 DE 19626609
(43) Veröffentlichungstag der Anmeldung: 06.05.1999
(73) Patentinhaber: BOEHRINGER WERKZEUGMASCHINEN GmbH, D-73033 Göppingen (DE)
(72) Erfinder: SANTORIUS, Rolf, D-73066 Uhingen-Nassachmühle (DE); SCHARPF, Paul, Dieter, D-73114 Schlat (DE); VOSS, Wolf-Dietrich, D-73087 Boll (DE); KOHLHASE, Matthias, D-78713 Schramberg-Sulgen (DE); KIEFER, Herbert, D-78256 Steisslingen (DE); SCHREIBER, Leo, D-73529 Schwäbisch-Gmünd (DE)
(74) Vertreter: Alber, Norbert
(86) Internationale Anmeldenummer: PCT/EP1997/003417
(87) Internationale Veröffentlichungsnummer: WO 1998/000260

(56) Entgegenhaltungen:
- EP-A- 0 018 000
- WO-A-96/39269

## Beschreibung

### I. Anwendungsgebiet

Die Erfindung betrifft ein Verfahren zum spanenden Bearbeiten der Stirnflächen als auch Umfangsflächen, die sowohl zentrisch als auch exzentrisch angeordnet sein können, bei Kurbelwellen, siehe die unter Art. 54(3) EPÜ fallende WO 96/39269.

### II. Technischer Hintergrund

Gerade Kurbelwellen stellen wegen der zu bearbeitenden, exzentrisch liegenden, z. B. Mantelflächen der Hublagerzapfen oder Stirnflächen der Wangen und der formbedingten Instabilität der Kurbelwelle als Werkstück immer hohe Anforderungen an die Bearbeitungsverfahren.

Üblicherweise werden Kurbelwellen durch spanende Bearbeitung mit bestimmten Schneiden, also Drehen, Fräsen, Drehräumen etc., vorbearbeitet, und anschließend die Feinbearbeitung auf ein Maß mittels Schleifen durchgeführt, wobei bisher in der Regel das Härten der Werkstückoberflächen nach der spanenden Vorbearbeitung und vor dem Schleifen erfolgt.

Obwohl theoretisch spanende Bearbeitungsverfahren zur Verfügung stehen, mit denen die Bearbeitung sowohl der zentrischen Mittellager als auch der exzentrischen Hublager und Stirnseiten der Wangenflächen möglich ist, wird aus Wirtschaftlichkeitsgründen meist eine Bearbeitung mit unterschiedlichen Verfahren vorgenommen:

So hat sich in der jüngsten Vergangenheit das Dreh-Drehräumen für die Bearbeitung der Mittellager durchgesetzt, wobei am schnell rotierenden, auf der Mittellagerachse eingespannten, Werkstück mit einem zu einer Bogenkontur, meist einer Kreiskontur oder Kreissegmentkontur, gebogenen Räumnadel gearbeitet wird.

Meist werden dabei auch die exzentrischen Stirnflächen der Wangen mitbearbeitet.

Für die Bearbeitung der exzentrischen Hublagerzapfen, also deren Mantelflächen, hat sich dagegen das Innenfräsen, also das Fräsen mit einem ringförmigen Fräser, der an seinem Innenumfang nach innen gerichtete Schneiden aufweist, etabliert. Däbei dreht sich die Kurbelwelle während der Bearbeitung meist nicht, sondern der Innenfräser rotiert und bewegt sich zusätzlich auf einer Kreisbahn, um den im inneren Freiraum des inneren Fräsers befindlichen Hublagerzapfen herum. Die Schnittgeschwindigkeit wird dabei ausschließlich durch die Bewegung des Innenfräsers erzielt. Einer der Nachteile dabei ist, daß gerade bei der Zapfenbearbeitung wegen der gleichgerichteten Krümmung von Zapfen und Fräser eine große Umschlingung die Folge ist, also oft mehrere Schneiden gleichzeitig im Eingriff sind. Hohe Querkrafteinleitungen in das Werkstück sind die Folge. Wegen der stillstehenden Kurbelwelle ist die gleichzeitige Bearbeitung mehrerer Hublagerzapfen durch jeweils separate Innenfräs-Einheiten möglich, sofern die entsprechenden Hublagerzapfen auch in axialer Richtung weit genug voneinander beabstandet sind, um unterschiedliche Innenfräs-Einheiten daran angreifen zu lassen.

Die beschriebenen Verfahren haben sich in der Großserien-Fertigung von Kurbelwellen, etwa für Pkw-Motoren, durchgesetzt, da sie trotz ausreichender Bearbeitungsgenauigkeit sehr viel niedrigere Bearbeitungszeiten pro Kurbelwelle oder pro Zapfen ermöglichen als z. B. des Drehen.

Bei einem solchen nach innen verzahnten Fräser ist zwar die Wartung, Reparatur, Neubestückung und Justierung von Wendeschneidplatten etc. schwieriger, jedoch bietet ein solches Werkzeug den prinzipiellen Vorteil einer guten und stabilen Lagerung in einem Werkzeugsupport, der das ringförmige Werkzeug allseits umschließt. Dies ist notwendig, da der Support das ringförmige Werkzeug beim Innenfräsen aufgrund der stillstehenden Kurbelwelle nicht nur in X-, sondern auch in Y-Richtung definiert verfahren können muß. Die Drehzahl des Innenfräsers bleibt jedoch während eines Umlaufes um den zu bearbeitenden Lagerzapfen in der Regel konstant und ist unabhängig von der derzeitigen Relativlage von Werkstück und Werkzeug zueinander.

Eine Verfahrbarkeit des Supportes, welcher den Innenfräser dreht, ausschließlich in X-Richtung, nicht jedoch zusätzlich in Y-Richtung, ist nur dann ausreichend, wenn einerseits das Werkstück während der Bearbeitung definiert drehend angetrieben wird (C-Achse des Werkstückes) und andererseits der freie Innendurchmesser des Innenfräsers größer ist als der Hub der größten zu bearbeitenden Kurbelwelle.

Gerade bei Maschinen, bei denen mehrere Werkzeugsupporte vorhanden sind, um mit mehreren Werkzeugen, also z. B. Innenfräsern, gleichzeitig am selben Werkstück zu arbeiten, bedeutet es unter dem Strich eine Vereinfachung und Einsparung, wenn bei jedem der mehreren Supporte auf die Realisierung der Y-Achse verzichtet werden kann, obwohl für die dann notwendige Drehung an den Spindelstöcken der in der Regel beiderseits eingespannten und angetriebenen Kurbelwelle zusätzlich die C-Achse vorhanden sein muß.

In diesem Fall rotiert bei gleichzeitiger Bearbeitung mehrerer Hublagerzapfen die Kurbelwelle mit gleichbleibender Drehzahl, und auch die verschiedenen Innenfräser drehen sich mit gleicher und während einer Zapfenbearbeitung gleichbleibender Drehzahl.

Ein derartiges Fräswerkzeug ist mit einer Vielzahl von Schneiden, die meist als Wendeschneidplatten auf einem ringförmigen (beim Innenfräser) oder scheibenförmigen (beim Außenfräser) Grundkörper im Innenumfangsbereich bzw. im Außenumfangsbereich angeordnet sind. Die Überholung bzw. Neubestückung oder Nachjustierung solcher Fräser ist zum einen zeitaufwendig, und wegen der nicht unerheblichen Kosten der verwendeten Schneidmittel kostenaufwendig.

In die zu minimierenden Bearbeitungskosten pro Kurbelwelle gehen daher anteilig nicht nur die Investitionskosten für die Maschine ein, deren Anteil pro Kurbelwelle mit sinkender Bearbeitungszeit abnimmt, sondern auch ein durch die Standzeit des Werkzeuges beeinflußter Kostenfaktor, den es zu minimieren gilt.

### III. Darstellung der Erfindung

### a) Technische Aufgabe

Es ist daher die Aufgabe gemäß der vorliegenden Erfindung, ein spanendes Bearbeitungsverfahren für die Bearbeitung von Kurbelwellen zu schaffen, bei dem durch gleichzeitige Bearbeitung durch mehrere Werkzeugeinheiten eine kurze Bearbeitungszeit pro Kurbelwelle möglich ist, und unter Einhaltung einer ausreichenden Maßhaltigkeit eine optimal lange Standzeit der Werkzeuge ermöglicht wird.

### b) Lösung der Aufgabe

Diese Aufgabe wird durch die Merkmale des Anspruches 1 gelöst. Vorteilhafte Ausführungsformen ergeben sich aus den Unteransprüchen.

Bei dieser Lösung waren unterschiedliche Negativ-Randbedingungen zu berücksichtigen:

Grundsätzlich ist ein zentrisches Spannen der Kurbelwelle, also ein Spannen auf der Mittellager-Achse gegenüber der wesentlich komplizierteren exzentrischen Spannung auf einer Hublagerachse, wie sie beispielsweise für die Hublagerbearbeitung mittels Dreh-Drehräumen notwendig ist, vorzuziehen.

Relativ unproblematisch ist die gleichzeitige Bearbeitung von z. B. zwel Hublagerzapfen, die in ihrer radialen Position gegenüber mit der Mittellager-Achse der Kurbelwelle übereinstimmen, und lediglich axial beabstandet sind. In diesem Fall ist die Bearbeitung mit zwei analog geführten und angetriebenen Werkzeugeinheiten, beispielsweise einem Tandemwerkzeug oder einem Werkzeugsatz, möglich.

Nicht alle Kurbelwellen bieten jedoch diese geometrischen Voraussetzungen, weswegen auch die Bearbeitung von radial nicht übereinstimmenden Hublagerzapfen durch separate Werkzeugeinheiten möglich sein soll. Dabei ist die Anwendung von Verfahren, bei denen die Schnittgeschwindigkeit primär durch die Drehung der Kurbelwelle erreicht wird, problematisch, als dann bei der relativ schnellen Rotation der Kurbelwelle die ebenso schnelle Nachführung der Werkzeugeinheiten für die Hublagerbearbeitung in X- und eventuell zusätzlich auch in Y-Richtung problematisch ist. Dieser Aspekt spricht für das Fräsen als Bearbeitungsverfahren. Dabei ist speziell das Außenfräsen wegen des einfacher zu handhabenden Werkzeugs und vor allem wegen der Möglichkeit, auch plane Außenflächen am Werkstück erzeugen zu können, zu bevorzugen.

Um bei gleichzeitigem Einsatz mehrerer Werkzeuge am Werkstück eine weitere Reduzierung der Bearbeitungszeit zu erreichen, können die Werkzeugstandzeit erhöht und/oder die Zerspanungsleistung pro Zeiteinheit erhöht werden.

Die Zerspanungsleistung pro Zeiteinheit läßt sich mit gesteigerter Schnittgeschwindigkeit erhöhen, die jedoch regelmäßig die Lebensdauer des Werkzeuges (Gesamt-Zerspanungsvolumen pro Werkzeug) sinken läßt.

Eine Erhöhung der Spandicke, die ebenfalls die Zerspanungsleistung pro Zeiteinheit anhebt, ist nicht möglich, da im Gegenteil die Reduzierung der Spandicke im Hinblick auf die Minimierung der Schnittkräfte, die auf das Werkstück einwirken, und damit Verbesserung der Maßhaltigkeit, erwünscht ist.

Eine Erhöhung der Schnittgeschwindigkeit ist bei dem bekannten Verfahren des Highspeed-Fräsens (HS-Fräsen) auf 350-500 m/min und teilweise sogar darüber möglich, was durch positive Schneidengeometrie, bestimmte Materialien der Schneidplatten (sowohl Grundmaterial als auch Beschichtung) möglich wurde.

Gerade beim HS-Fräsen mit 180-800, insbesondere mit 350-500 m/min haben Untersuchungen jedoch ergeben, daß zwar wie bisher bekannt das Gesamtzerspanungsvolumen eines Werkzeuges grundsätzlich mit steigender Schnittgeschwindigkeit abnimmt, dabei jedoch bei Spandicken von 0,05-0,4 mm, insbesondere bei 0,1-0,2 mm, bei unterschiedlichen Schneidstoffen und Schneidstoffbeschichtungen eine optimal hohe Lebensleistung, also Zerspanungsvolumen während der Lebensdauer, des Werkzeuges erzielt wird.

Weitere Untersuchungen haben ergeben, daß die Einhaltung dieses Wertes bzw. Wertebereiches z. B. beim Fräsen, bei dem der Span eine in seinem Verlauf sich ändernde Dicke besitzt, durch Einhaltung für die mittlere Spandicke, also den arithmetischen Mittelwert oder den integrierten Mittelwert der Dicke des Spanes oder die maximale Dicke des Spanes, ausreicht. Unter Einhaltung dieses Parameters wird dann versucht, die Schnittgeschwindigkeit möglichst hoch zu halten, um die Bearbeitungszeiten zu reduzieren.

Bei der ermittelten optimalen Spandicke hat es sich weiterhin als sinnvoll erwiesen, soweit als möglich im Gleichlauf zu fräsen. Dies hängt vermutlich damit zusammen, daß bei einer mittleren Spandicke von z. B. 0,1-0,2 mm im Gleichlauf und vor allem bei der für das HS-Fräsen eingesetzten positiven Schneidengeometrie die auf das Werkstück wirkenden Schnittkräfte trotz des unterbrochenen Schnittes beim Fräsen nur relativ geringe dynamische Belastungen in das Werkstück einbringen und wegen des Einhakens der positiv geformten Schneide auch ein Ausweichen des Werkstückes zur Seite, welches in Maßungenauigkeiten resultiert, weitestgehend vermieden wird.

Wenn zwei voneinander unabhängig arbeitende und ansteuerbare Fräseinheiten an ein und derselben dreh- und antreibbaren Kurbelwelle unterschiedliche exzentrische Bearbeitungsflächen bearbeiten, und ein optimaler Wert bzw. Bereich für die Spandicke eingehalten werden soll, kann unter Umständen nur an einer Bearbeitungsstelle die gewünschte maximale Schnittgeschwindigkeit, z. B. die Schnittgeschwindigkeit des HS-Fräsens, erzielt werden.

Um an den anderen Bearbeitungsstellen die Spandicke bzw., mittlere Spandicke im optimalen Bereich zu halten, muß unter Umständen dort die Drehzahl des Fräsers reduziert werden, und damit einhergehend auch die Schnittgeschwindigkeit. Aus diesem Grund wird beim Beginn der Zapfenbearbeitung der Fräser nicht direkt radial bis auf Sollmaß gefahren, sondern - während sich die Kurbelwelle dreht, langsam, während einer Drehung des zu bearbeitenden Zapfens von 30 - 90, vorzugsweise von 50 - 70°, langsam bis auf das radiale Sollmaß gefahren. Dadurch wird auch beim Beginn der Bearbeitung eines Lagerzapfens die Vorgabe hinsichtlich der Spandicke eingehalten, und es werden zu Beginn der Bearbeitung keine unzulässig hohen Querkräfte in das Werkstück eingebracht. Nach Erreichen des radialen Sollmaßes muß ein vollständiger Umlauf der Zapfenfläche, vorzugsweise ca. 100° Umfangsfläche, abgearbeitet werden, um zu einem optimalen Bearbeitungsergebnis zu gelangen.

Wenn es keinen optimalen Wert für die Spandicke im Hinblick auf die Lebensleistung eines Werkzeuges gibt, würde die Optimierung der unabhängigen Werkzeugeinheiten im Hinblick auf maximale Schnittgeschwindigkeit erfolgen. Diese vor allem für die Graugußbearbeitung (GGG60-GGG80) ermittelten Gesetzmäßigkeiten können für andere Werkstückmaterialien wie Stahl, bei denen auch andere Gruppen von Schneidstoffen eingesetzt werden, unter Umständen auch gültig sein.

Durch zusätzliche Verwendung einer positiven Schneidengeometrie anstelle der bisher beim Fräsen angewandten negativen Schneidengeometrie, die vor allem in Verbindung mit den niedrigen mittleren oder maximalen Spandicken dennoch zu einer ausreichenden Standzeit der Schneidmittel führt, ergibt sich wiederum eine-Reduzierung der Schnittkräfte und in der Folge auch eine Reduzierung der notwendigen Antriebsleistungen für das Werkzeug, die bei den angegebenen Größenverhältnissen nur etwa die Hälfte bis ein Drittel der für das Innenfräsen oder Dreh-Drehräumen benötigten Leistung liegt. Auch dadurch werden - neben den niedrigeren Energiekosten - die Abwärmeprobleme der Antriebe, die sich immer negativ auf die gesamte Maschine und das Bearbeitungsergebnis auswirken, minimiert.

Das Hochgeschwindigkeitsfräsen kann dabei insbesondere nicht nur am ungehärteten, sondern auch am gehärteten (z. B. 60 bis 62 Rockwell -Härtegrade HRC, insbesondere durchgehärtet) Werkstück durchgeführt werden. In diesem Fall wird als Schneidstoff vorzugsweise Mischkeramik oder polykristallines Bornitrid (PKB), bei letzterem insbesondere wieder kubisches Bornitrid (CBN) eingesetzt. Vorzugsweise wird daher zunächst eine Hartmetall-Schneidplatte wie üblich gesintert, die jedoch Vertiefungen im Schneidenbereich, z. B. in der Spanfläche und zur Schneidkante hin offen, aufweist. In diese Vertiefungen des Grundkörpers wird CBN-Pulver gefüllt und anschließend gesintert.

Nicht nur die Ecken von Wendeschneidplatten können auf diese Art und Weise verstärkt werden, sondern durch Anordnung mehrerer CBN-Pallets nebeneinander entlang einer Schneidenkante oder eines balkenförmigen CBN-Einsatzes kann eine ganze Schneidkante verstärkt werden. Auch ungehärteter Stahl oder Guß kann damit bearbeitet werden, auch mittels Fräsen.

Diese Schneidstoffe können auch ohne Kühlschmiermittel, also trocken, eingesetzt werden, was Entsorgungskosten und Umweltprobleme erspart.

Dadurch ist es möglich, den bei konventioneller Herstellung (spanende Bearbeitung vor dem Härten) auftretenden Verzug des Werkstückes, bedingt durch den Härteprozeß, bereits durch die spanende Bearbeitung mit abzuarbeiten. Da beim Hochgeschwindigkeitsfräsen und insbesondere beim Hochgeschwindigkeitsfräsen am gehärteten Werkstück Obefächenqualitäten erzielbar sind, die als Endzustand des Werkstückes akzeptabel sind, ist dadurch der völlige Wegfall zumindest des Grobschleifbearbeitungsvorganges möglich.

Als besonders günstig hat es sich erwiesen, bei der Bearbeitung der Zapfen- und Wangenflächen bei Kurbelwellen, die aus Guß oder Stahl bestehen, und im ungehärteten Zustand spanend bearbeitend werden mittels eines Außenrundfräsers, insbesondere mittels eines scheibenförmigen Fräsers mit Schneiden am Umfangsbereich, folgende Parameter einzuhalten:
- Schnittgeschwindigkeit bei der Schruppbearbeitung: mindestens 180, besser 250-600 m/min,
- Schnittgeschwindigkeit bei der Schlichtbearbeitung: mindestens 200, besser 300-800 m/min,
- Spandicke: 0,05 - 0,5 mm insbesondere 0,1-0,3 mm.

Als Werkzeug wird dabei in der Regel ein scheibenförmiger, drehend angetriebener Werkzeuggrundkörper mit aufgesetzten Wendeschneidplatten verwendet. Dabei sind die Schneidplatten hinsichtlich ihres Einsatzzweckes (Bearbeitung der Stirnflächen an den Wangen, Bearbeitung der Mantelflächen an den Zapfen der Hauptlagerstelle und Hublagerstellen, Erstellen der Unterstiche am Übergang zwischen Mantelflächen und Stirnflächen) unterschiedlich gestaltet und auch in bezug zum Werkzeugträger bzw. zum Werkstück unterschiedlich positioniert:

| | Wangenplatte | | Unterstichplatte | | Zapfenplatte (Planplatte) | |
|---|---|---|---|---|---|---|
| Grundmaterial | K20-K25 | | K15 | | K10-K15 | |
| Beschichtung | TiCN+Al₂O₃+TiN oder TiN+TiCN+Al₂O₃+TiN oder TiN+Al₂O₃+TiN | | TiN | | TiCN+Al₂O₃+TiN oder TiN+TiCN+Al₂O₃+T iN oder TiN+Al₂O₃+TiN | |
| | von/bls | insbes. | von/bls | insbes. | von/bis | insbes. |
| Gesamtdicke der Beschichtung | 3-15 µm | 10-12 µm | 2-8 µm | 3-5 um | 2-8 µm | 3-5 µm |
| γₚ | +1°...+8° | +5° | +4° | +4° | +2° | +2° |
| γ_{f} | -4°...+4° | -1° | +1° | +1° | +2° | +2° |
| γₙ | +5°... +14° | +9° | +9° | +9° | +9° | +9° |
| λₛ | +2°... +7° | +5° | +5° | +5° | +3° | +3° |
| κ | um +2° | 5° | | 4° | | - |
| Schneldkantenverrundung (SKV) | 0,01- 0,05 mm | ca. 0,02 mm | ca. 0,02 mm | ca. 0,02 mm | ca. 0,02 mm | ca. 0,02 mm |
| Eckenradius R | 1,2-2,0 mm | 1,6 mm | 1,6 mm | 1,6 mm | - | - |
| Länge | min. 10 mm | 15,9 mm | 15,9 mm | 15,9 mm | 12,1 mm | 12,7 mm |
| Höhe | min. 10 mm | 12,7 mm | 12,7 mm | 12,7 mm | 12,7 mm | 12,7 mm |
| Dicke | min. 3 mm | 6,35 mm | 5,55 mm | 5,55 mm | 4,7 mm | 4,7 mm |
| **Angaben In bezug auf den Werkzeuggrundkörper:** | | | | | | |
| Schnittbreite | 23 mm | | - | | 13 mm 22 mm | (geteilt) bis (komplett) |
| Nenndurchmesser | z.B. 800 mm | | z.B. 800 mm | | z.B. 800 mm | |
| Teilungswinkel von Schneide zu Schneide | 3,6° | | 5,5°-7,5° | | 5,5°-7,5° | |
| Teilungsabstand von Schneide zu Schneide | 25 mm | | 35-50 mm | | 35-50 mm | |
| Anzahl Schneidplatten | z.B. 200 | | z.B. 120 (geteilt) bis 200 (komplett) | | z.B. 120 (geteilt) bis 200 (komplett) | |

Die Angabe des Grundmaterials bezieht sich auf die bekannten ISO-Anwendungsgruppen. Dabei besteht
K10: aus 94,2 % Wolframkarbid (WC), 5,5 % Kobalt (Co) und 0,3 % ... (Ta/C)
K20: aus 93,2 % WC, 6 % Co und 0,6% Ta/C und 0,2 % Titankarbid (TiC)

Die Biegefestigkeit beträgt 1.900 N/m² bei K10 und 2.000 N/m² bei K20.

Bei den angegebenen Beschichtungen sind die einzelnen Verbindungen schichtweise nacheinander in der angegebenen Reihenfolge von innen nach außen aufgetragen.

### c) Ausführungsbeispiele

Eine Ausführungsform gemäß der Erfindung ist im folgenden anhand der Figuren beispielhaft näher beschrieben. Es zeigen:
- Fig. 1:: eine Prinzipdarstellung des Gleichlauf-Außenfräsens an einem Kurbelwellenzapfen,
- Fig. 2:: eine Prinzipdarstellung bei gleichzeitiger Bearbeitung an zwei verschiedenen Hublagerzapfen,
- Fig. 3:: Detaildarstellungen von zwei unterschiedlichen Bearbeitungsstellen,
- Fig. 4:: eine Bahnkurve bei Zapfenbearbeitung,
- Fig. 5:: eine Darstellung der Bahnkurve beim Zapfenfräsen,
- Fig. 6:: den Schneidkeil des Werkzeuges in Prinzipdarstellung,
- Fig. 7 und 8:: definierte Ebenen im Werkzeugbezugssystem,
- Fig. 9 und 10:: die Lagewinkel der Schneide im Werkzeugbezugssystem am Beispiel eines Drehmeißels für das Längsdrehen (Fig. 9) und das Plandrehen (Fig. 10).

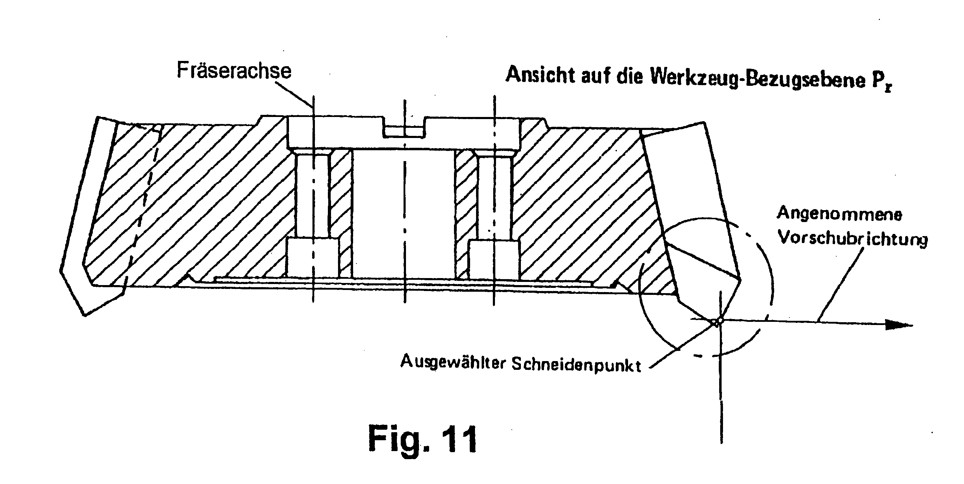

- Fig. 11:: einen Schnitt durch einen Fräsmesserkopf,
- Figuren 12a-12f:: Schnitte durch das Werkzeug des Fräsmesserkopfes gemäß Fig. 11,
- Fig. 13a:: zeigt den Einsatz einer Wangenplatte, betrachtet in Y-Richtung,
- Fig. 13b:: den Einsatz einer Zapfenplatte in Blickrichtung Y,

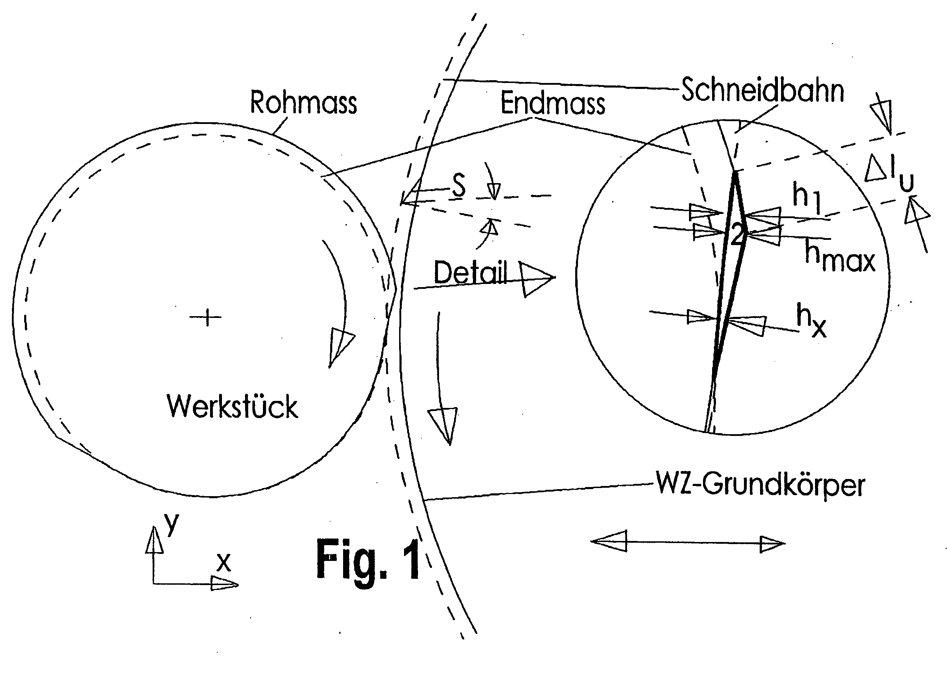

Fig. 1 zeigt in Blickrichtung der Z-Achse die grundsätzliche Situation der Bearbeitung einer Umfangsfläche, beispielsweise des Zapfens einer Kurbelwelle, aber auch einer unrunden Umfangsfläche, mittels Außenfräsen. Eine Vergrößerung der Bearbeitungsstelle ist im rechten Teil der Fig. 1 dargestellt.

Das Werkstück soll von dem größeren Rohmaß auf das kleinere Endmaß bearbeitet werden.

Dabei stehen die Schneiden S, von denen nur eine eingezeichnet ist, über den Werkzeuggrundkörper radial vor, um diesen Abtrag bewirken zu können. Der Werkzeuggrundkörper ist dabei in X-Richtung definiert verfahrbar und rotiert gegen den Uhrzeigersinn. Da das Fräsen im Gleichlauf geschehen soll, rotiert das Werkstück im Uhrzeigersinn, so daß sich an der Bearbeitungsstelle Werkzeug und Werkstück in die gleiche Richtung bewegen.

Wie die vergrößerte Darstellung zeigt, wird die neue Schneide S einen Span 1 erzeugen, der durch zwei konvexe und eine konkave Bogensegmente im Querschnitt begrenzt wird, und die Form eines flachen, unregelmäßigen Dreiecks, besitzt.

Dabei ist die konkave Seite die durch den vorhergehenden Schnitt erzeugte Flanke, und die lange konvexe Seite, die durch den die neue Schneide S erzeugte Flanke. Die kurze konvexe Flanke ist die entlang des Umfanges des Zweigstückes gemessene Länge ΔIᵤ, also die Umfangslänge zwischen dem Auftreffen von zwei hintereinander angeordneten Schneiden des Werkzeuges auf dem Umfang des Werkstückes.

In der Praxis behält der Span 1 natürlich nicht die aus Fig. 1 ersichtliche Form bei, sondern wird aufgrund der Ablenkung an der Spanfläche der Schneide spiralig aufgerollt.

Aus Fig. 1 ist zu erkennen, daß der Span 2 - in Durchlaufrichtung der Schneide betrachtet - zunächst in seiner Spandicke, z. B. h₁, schnell zunimmt bis zur maximalen Spandicke hₘₐₓ. Von dort aus nimmt die Spandicke relativ langsam bis zum Ende kontinuierlich (z. B. hₓ) ab.

Aus dieser Darstellung ist ersichtlich - wenn die Differenz zwischen Rohmaß und Endmaß gleich bleibt und die Drehgeschwindigkeit des Werkstückes ebenfalls gleich bleibt - daß eine Verringerung der Drehgeschwindigkeit des Werkzeuges eine Vergrößerung des Schnittabstandes ΔIᵤ bewirkt, und damit auch eine Vergrößerung von hₘₐₓ.

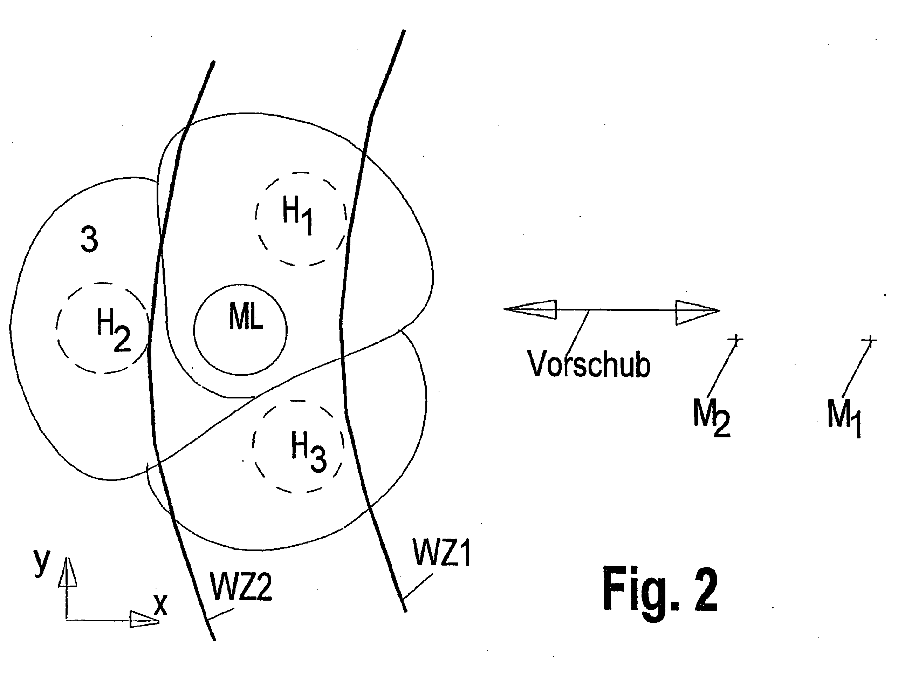

Fig. 2 stellt - wiederum in Z-Richtung betrachtet - z. B. eine Kurbelwelle für einen 6-Zylinder-Reihenmotor mit drei in ihrer Drehlage zum Mittellager ML unterschiedlich positionierten Hubzapfen H1-H3 dar.

An dieser Kurbelwelle sind - an unterschiedlichen axialen Positionen - zwei separate scheibenförmige Außenfräser (WZ1, WZ2) im Einsatz. Eins der Werkzeuge könnte beispielsweise den Hubzapfen H1, das andere den Hubzapfen H2 bearbeiten, wie in Fig. 2 dargestellt, aber ebenso könnte eines der Werkzeuge einen Hubzapfen, das andere der Werkzeuge die Stirnfläche einer Wange bearbeiten.

In letzterem Fall könnte theoretisch die Wangenbearbeitung teilweise bei stillstehender Kurbelwelle erfolgen, indem sich das betreffende Werkzeug WZ1 oder WZ2 in Vorschubrichtung, also in X-Richtung, die Stirnfläche der Wange entlangarbeitet. Da bei Stillstand der Kurbelwelle jedoch an der an anderer axialer Position stattfindenden Bearbeitung einer Mantelfläche, sei es eines Hubzapfens H oder eines Mittellagers ML, kein Bearbeitungsfortschritt erzielbar ist, wird auch die Bearbeitung der Wangenfläche vorzugsweise bei drehender Kurbelwelle erfolgen.

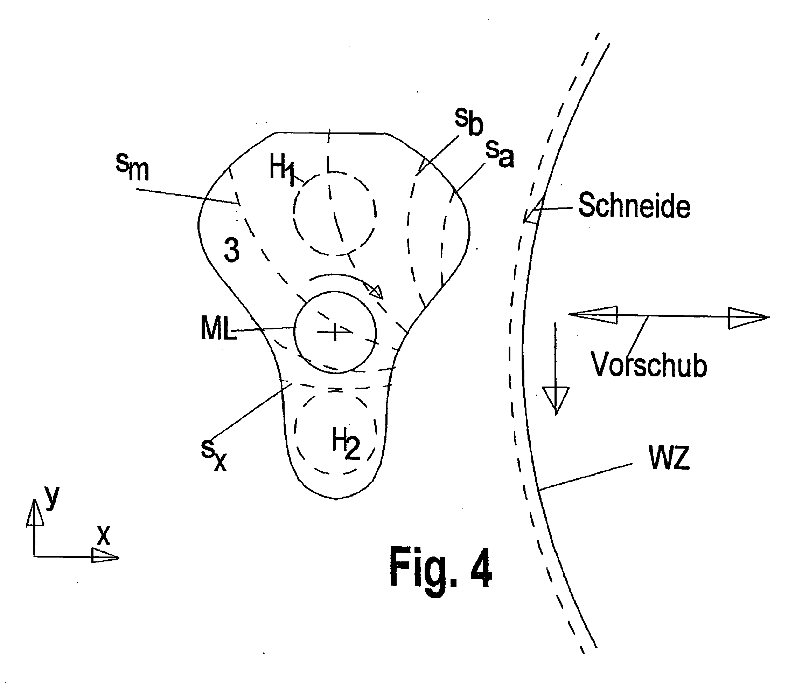

Dabei ergeben sich - bei einem Beginn der Wangenbearbeitung in der in Fig. 4 dargestellten Position der Kurbelwelle und anschließendem Weiterdrehen der Kurbelwelle - Schneidbahnen sₐ, s_{b}, sₘ, sₓ, von denen einige in Fig. 4 eingezeichnet sind.

Wie ersichtlich, haben diese Schneidbahnen - wegen des Gleichlaufes des Fräsers - mit der Werkstückdrehung - an ihrem Beginn einen größeren Abstand voneinander als an ihrem Ende, also dem Punkt des Auslaufens der Schneide aus der Wangenseitenfläche.

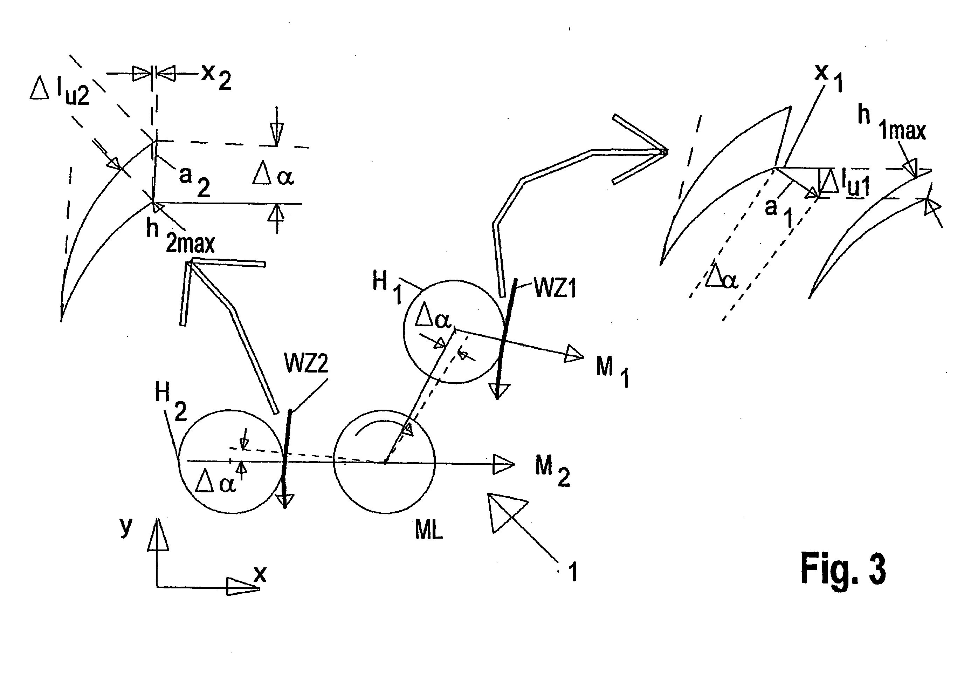

Fig. 3 zeigt die Zusammenhänge auf, wenn zwei separate Werkzeuge WZ1, WZ2 zwei verschiedene Hubzapfen H1, H2 gleichzeitig bearbeiten. Die Werkzeuge WZ1 und WZ2 können unabhängig voneinander in X-Richtung definiert verfahren und in ihrer Drehzahl gesteuert werden. Die verbindende Größe ist jedoch die Drehung der um die Mittellager ebenfalls gesteuert drehbar angetriebenen Kurbelwelle als Werkstück, welche bei bestimmten Arbeitsoperationen auch angehalten werden kann.

In der in Fig. 3 dargestellten Situation befindet sich Hubzapfen H2 auf einer Linie mit dem Mittellager ML1 und dem Mittelpunkt M₁ und M₂ der Werkzeuge WZ1 oder WZ2. Der Hubzapfen H1 ist gegenüber dem Mittellager um ca. 120° in Uhrzeigerrichtung versetzt.

Wenn - wie angegeben - die Werkzeuge WZ1 und WZ2 jeweils im GegenUhrzeigersinn rotieren, und die Kurbelwelle - wie an deren Mittellager ML eingezeichnet - im Uhrzeigersinn, wird ersichtlich an dem Hublager H1 im Gleichlaufverfahren gefräst, was aus den oben angegebenen Gründen gewünscht wird.

Am Hublager H2 könnte der Eindruck entstehen, daß es sich hier um ein Gegenlauffräsen handelt, da sich das Werkzeug WZ2 an dieser Stelle nach unten bewegt, der Hubzapfen H2 jedoch nach oben.

Auf die Absolutbewegung des Hubzapfens kommt es jedoch bei der Beurteilung, ob Gleichlauf- oder Gegenlauffräsen vorliegt, nicht an, sondern darauf, ob das Hublager H2 relativ um seinen Mittelpunkt eine Drehung vollzieht, die seine Oberfläche an der Bearbeitungsstelle immer in der gleichen Richtung bewegen läßt wie den Fräser.

Der in Fig. 3 - absolut betrachtet - nach oben wandernde Hubzapfen H2 rollt jedoch ersichtlich entlang des Werkzeuges WZ2 nach oben ab, so daß also relativ zum Mittelpunkt des Hublagers H2 eine Drehung des Hublagers im Uhrzeigersinn stattfindet und damit an der Bearbeitungsstelle de facto Gleichlauf herrscht.

Fig. 3 zeigt ferner den zwangsweise vorhandenen Zusammenhang zwischen der Bearbeitung an den beiden Hublagern H1 und H2, die vor allem bei der Optimierung von mehreren gleichzeitig ablaufenden Bearbeitungsvorgängen im Hinblick z. B. auf eine bestimmte Spandicke zu berücksichtigen ist:

Es sei angenommen, daß sich der Fräser WZ2 in Relation zur Kurbelwelle 1 - von welcher in Fig. 3 nur das Mittellager ML und die zwei momentan bearbeiteten Hubzapfen H1 und H2 der Übersichtlichkeit halber dargestellt sind - so schnell relativ zueinander drehen, daß zwischen dem Eingriff zweier aufeinanderfolgender Schneiden des Werkzeuges WZ2 am Hublager H2 die Kurbelwelle um den Winkel Δα weitergedreht wurde. Da in Fig. 3 der Mittelpunkt des Hublagers H2 und der Mittelpunkt der Kurbelwelle, also des Mittellagers ML, auf einer Linie mit der Mitte M2 des Werkzeuges WZ2 liegen, bewirkt der Schwenkwinkel Δα einen Versatz a₂ des Auftreffpunktes der neuen Schneide gegenüber der alten Schneide, der fast genau in Y-Richtung verläuft.

Dadurch muß nur eine sehr geringe X-Komponente x₂ durch entsprechende X-Bewegung des Werkzeuges WZ2 erfolgen, und der sich ergebende Schnittabstand ΔIᵤ₂ bedingt einen Spanquerschnitt, dessen Dicke der optimalen Spandicke entsprechen soll.

An der Bearbeitungsstelle des Hublagerzapfens H1 soll ebenfalls möglichst die gleiche Spandicke erzielt werden. Auch der Mittelpunkt des Hublagerzapfens H₁ ist - gleiche Drehzahl und gleichen Durchmesser der Werkzeuge WZ1 und WZ2 vorausgesetzt - um den Winkelbetrag Δα gegenüber der Mitte des Hublagers verschwenkt worden, bis vom Werkzeug WZ1 die nächste Schneide in Eingriff gelangt.

Der an der Bearbeitungsstelle dadurch bewirkte Versatz a₁ ist dabei vernachlässigbar größer als a₂, da der Abstand von der Mitte des Mittellagers ML zur Bearbeitungsstelle am Hublager H1 geringfügig größer ist als zur Mitte des Hublagers H₁. Dieser Versatz a₁ besitzt eine ausgeprägte Komponente x₁ in X-Richtung, die durch entsprechende Bewegung des Werkzeuges WZ1 in X-Richtung ausgeglichen werden muß. Damit bleibt von a₁ nur ein relativ geringer Anteil als Schnittabstand ΔIᵤ₁ in Y-Richtung übrig. Dies würde den in Fig. 3 rechts außen dargestellten dünnen Span mit einer Maximaldicke von nur h₁ₘₐₓ ergeben,- welche sehr viel geringer ist als die optimale Spandicke.

Um auch an dieser Bearbeitungsstelle auf die optimale Spandicke zu kommen, muß die Drehzahl des Werkzeuges WZ1 gegenüber der Drehzahl von WZ2 so reduziert werden, daß der Schnittabstand ΔIᵤ₁ soweit ansteigt, bis die gewünschte Spandicke auch am Hublagerzapfen H₁ erreicht wird. Dabei ist eine Reduzierung der Drehzahl von Werkzeug WZ1 auf bis zu etwa 30 % der Drehzahl von Werkzeug WZ2 notwendig.

Neben dem beschriebenen ersten Optimierungsziel einer bestimmten - mittleren oder maximalen - Spandicke könnte das sekundäre Optimierungsziel eine Schnittgeschwindigkeit sein, die sich innerhalb eines vorgegebenen Zielkorridors bewegen soll oder einen bestimmten Maximalwert nicht überschreiten soll.

Im ersteren Fall würde dies in dem in Fig. 3 dargestellten Bearbeitungsfall dazu führen, daß bei der Bearbeitung des Hublagers H2 die Drehzahlen des Werkstückes und des Werkzeuges WZ2 in Relation zueinander - so daß am Hublager H2 die gewünschte Spandicke erhalten bleibt, so erhöht werden, daß sich die Drehzahl von Werkzeug WZ2 am oberen Ende der vorgegebenen Bandbreite für die Schnittgeschwindigkeit bewegt. Dadurch ergibt sich auch eine Erhöhung der Drehzahl des Werkzeuges WZ1, wodurch die Schnittgeschwindigkeit am Hublagerzapfen H₁ ebenfalls noch innerhalb der vorgegebenen Bandbreite für die Schnittgeschwindigkeit liegen sollte.

Bei Vorgabe einer Obergrenze für die Schnittgeschwindigkeit dagegen würde diese Obergrenze auf die Bearbeitung am Hublagerzapfen H₂ angewandt werden, welche die höhere Schnittgeschwindigkeit gegenüber der Bearbeitung am Hublagerzapfen H₁ besitzt, so daß dadurch eine absolute Obergrenze der Schnittgeschwindigkeit automatisch an beiden vorhandenen Bearbeitungsstellen eingehalten wird.

Bei der gleichzeitigen Bearbeitung von mehr als zwei Stellen an einer Kurbelwelle ist analog das begrenzende Kriterium bei absoluten Höchst- oder Mindestwerten immer auf die Bearbeitungsstelle mit dem relativ höchsten bzw. niedrigsten entsprechenden Wert anzuwenden.

Bei der Anwendung von vorgegebenen Bandbreiten bestimmter Schnittparameter kann es sein, daß nicht für alle Bearbeitungsstellen die Einhaltung dieser Bandbreite möglich ist. In diesem Fall ist dann entweder der vorgegebene Bandbreitenbereich zu vergrößern oder es muß ein drittrangiger Optimierungsparameter vorgegeben werden. Diese dritte Optimierungsgröße könnte beispielsweise die Spanlänge (vor allem bei Bearbeitung von Wangenseitenflächen) sein.

Die in Fig. 3 dargestellten gegenseitigen Abhängigkeiten bei Einhaltung einer bestimmten Spandicke treten verstärkt dann auf, wenn eine von mehreren gleichzeitigen Bearbeitungsstellen an der Kurbelwelle die Bearbeitung einer Stirnfläche einer Wange ist, wie in Fig. 4 dargestellt. Die Darstellung in Fig. 4 zeigt eine Kurbelwelle z. B. für einen Vierzylinder-Reihenmotor, bei der sich in radialer Richtung die Hubzapfen H1 und H2 bezüglich des Mittellagers ML gegenüberstehen.

Wenn in der in Fig. 4 dargestellten Position mit der Bearbeitung der Wangenfläche 3 durch das Werkzeug WZ begonnen würde, würde sich die Kurbelwelle um die Mitte des Mittellagers ML weiter in der angegeben Richtung (im Uhrzeigersinn) drehen, während das Werkzeug WZ gegen den Uhrzeigersinn dreht, um Gleichlauffräsen zu erzielen.

Auf der Wangenfläche 3 sind einige der sich dadurch ergebenden Schneidbahnen sₐ, s_{b}, sₘ, sₓ eingezeichnet.

Wegen der gleichzeitigen Drehung der Kurbelwelle ergeben sich dadurch Spanquerschnitte, die wiederum am Beginn des Spanes deutlich größer sind als gegen Ende des Spanes, und zusätzlich unterscheiden sich die Späne stark in der Spanlänge, abhängig von der jeweiligen Lage der Schneidbahn auf der Wangenfläche 3.

Auf eine Drehung der Kurbelwelle kann in der Regel nicht vollständig verzichtet werden, da sonst ein an anderer Stelle der Kurbelwelle gerade stattfindende Bearbeitung eines Lagerzapfens keinen Bearbeitungsfortschritt mehr zeitigen würde.

Wenn somit an einer Kurbelwelle gleichzeitig mehrere Wangenseitenflächen oder eine Wangenseitenfläche gleichzeitig mit der Bearbeitung eines Lagerzapfens stattfindet, treten die am Beispiel der Fig. 3 dargestellten Diskrepanzen der Spandicken zwischen den verschiedenen Bearbeitungsstellen bei gleichen Drehzahlen und Durchmessern aller Werkzeuge verstärkt auf, so daß verstärkt die Drehzahlen, und/oder bei Wangenbearbeitung auch die Bewegung in Querrichtung, also X-Richtung durch den Fräser, ständig verändert werden müssen, um in jeder Phase der Bearbeitung und an allen Bearbeitungsstellen gleichzeitig die gewünschte optimale Spandicke einzuhalten.

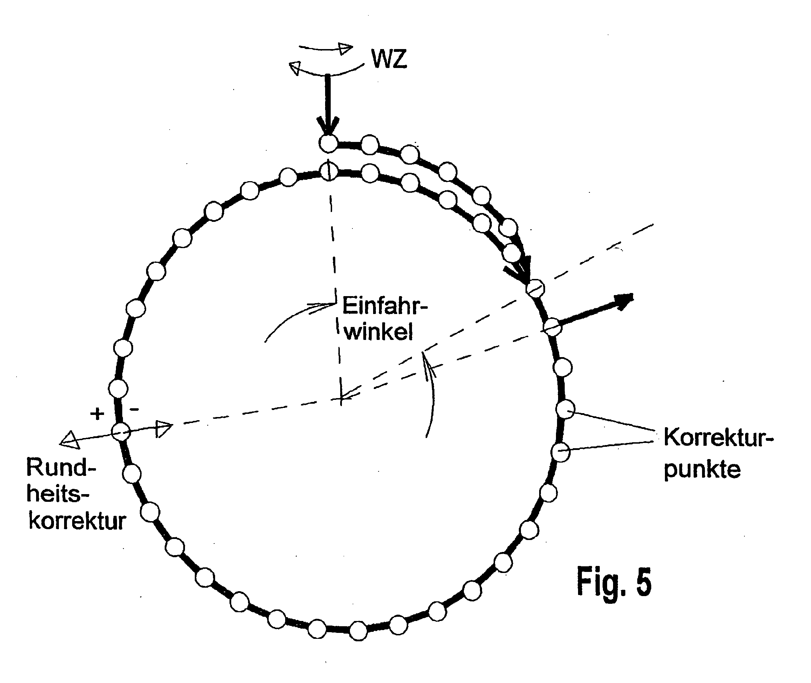

Wie Fig. 5 zeigt, wird auch bei Beginn der Bearbeitung der Mantelfläche z. B. eines Lagerzapfens werkstückschonend wie folgt vorgegangen:

Der Fräser wird trotz der Drehung des Werkstückes relativ langsam bis auf das radiale Sollmaß zugestellt. Eine zu schnelle radiale Zustellung würde nicht nur die Spandicke unzulässig erhöhen, sondern vor allem - wegen der dann großen Spanlänge aufgrund relativ großer Umschlingung zwischen einem scheibenförmigen Außenfräser, der um eine Achse parallel zur Lagerzapfenachse rotiert, und der momentanen Bearbeitungsstelle - auch die hiermit korrelierenden Querkräfte, welche in das Werkstück eingeleitet werden, relativ hoch werden.

Wie Fig. 5 zeigt, wird der Fräser so langsam radial gegen den Mittelpunkt des zu bearbeitenden Lagerzapfens vorwärtsbewegt, daß das vorhandene Aufmaß erst nach einem Einfahrwinkel von ca. 50 - 70, vorzugsweise etwa 60°, des Lagerzapfen-Umfanges durch den Fräser erfaßt ist. Von diesem Punkt ab muß eine vollständige Umdrehung des zu bearbeitenden Lagerzapfens, vorzugsweise etwas mehr, also ca. 370°, abgearbeitet werden, um eine optimale Anpassung der Ist-Kontur an die Soll-Kontur des Zapfens zu erreichen. Das Ausfahren des Fräsers kann dann direkt radial erfolgen.

Zusätzlich sind in Fig. 5 entlang der Bearbeitungsbahn Korrekturpunkte mit einem Zwischenwinkel von etwa 10 - 15° zum Mittelpunkt des zu bearbeitenden Hublagerzapfens angeordnet.

Nach dem Herstellen der ersten Stücke einer zu bearbeitenden Serie kann die Annäherung der Ist-Umfangskontur an die Soll-Umfangskontur gemessen werden und durch Abänderung jedes einzelnen der Korrekturpunkte - durch entsprechende Eingabe von Korrekturwerten für die einzelnen Korrekturpunkte in die Maschinensteuerung - die erzielte Ist-Kontur nachträglich empirisch korrigiert werden.

In Fig. 4 ist ferner die Umfangskontur der Wange an einer Stelle eben abgeflacht. Teilweise wird auch die Umfangskontur der Wangenfläche mittels Außenfräsen bearbeitet. Mit dem Außenfräsen gemäß der Erfindung ist - durch entsprechende Steuerung der Drehlage, also der Drehgeschwindigkeit der Kurbelwelle in Relation zur X-Verschiebung des Fräsers - nicht nur jede gewünschte (also nach außen gekrümmte) Kontur erzielbar, sondern auch ebene, z. B. tangential zum Mittellager ML der Kurbelwelle liegende Abflachungen. Derartige ebene Anfräsungen werden entweder zum nachträglichen Befestigen z. B. von Ausgleichsgewichten benötigt, oder auch zum Wuchten der Kurbelwelle direkt in der Aufspannung der spanenden Bearbeitung.

Selbst konkave, also vertiefte, Umfangskonturen, können hergestellt werden, solange deren Krümmungsradius größer ist als der Radius des scheibenförmigen Außenfräsers.

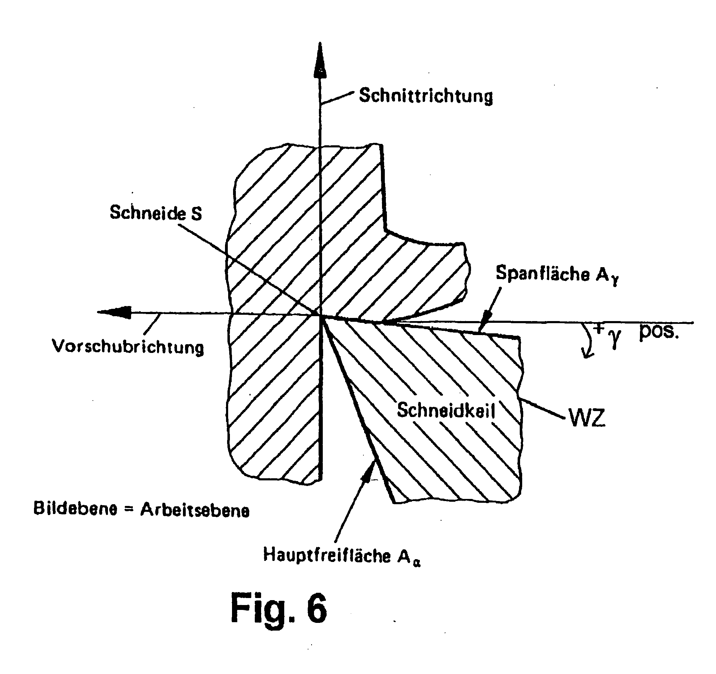

Dabei zeigt Fig. 6 einen Schnitt durch ein spanendes Werkzeug WZ; beispielsweise einen Drehmeißel, wobei die meisten Bezeichnungen und Winkel sowohl für das Drehen, als auch für das Fräsen gelten. Dabei wird die Schneide, beispielsweise die Hauptschneide S, durch die durch die Spanfläche A_{γ} sowie die Hauptfreifläche A_{α} gebildete Kante gebildet, und die Nebenschneide S' durch die Spanfläche A_{γ} und die im Winkel zur Hauptfreifläche A_{α} verlaufende Nebenfreifläche A'_{α}. Die in Fig. 6 spitz gezeichnete Schneide S ist in der Praxis niemals vollständig spitz, sondern muß eine gewisse Rundung, die Schneidkantenverrundung SKV, besitzen, um ein Ausbrechen der Schneidkante zu verhindern.

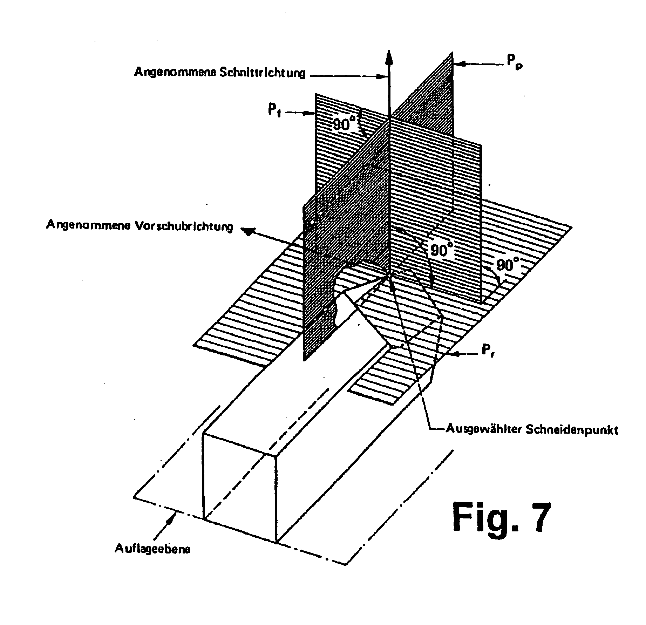

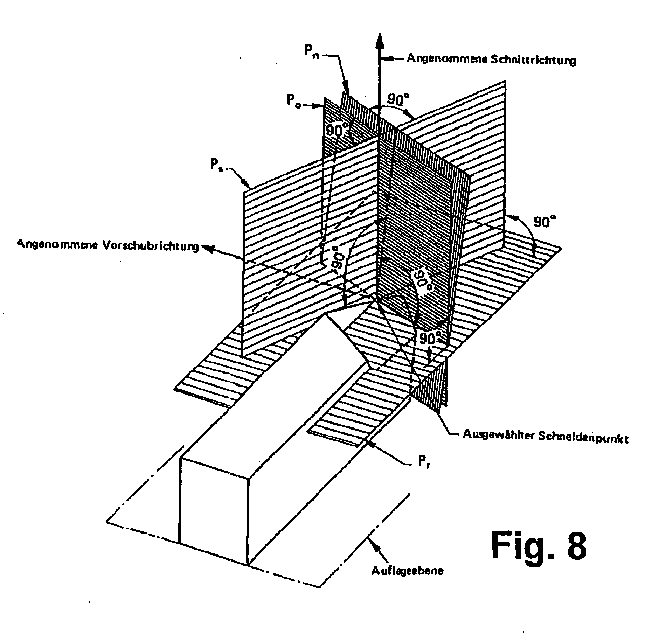

In den Fig. 7 und 8 sind verschiedene Richtungen und Ebenen bezüglich des Werkzeuges definiert.

Dabei ist die Werkzeug-Bezugsebene Pᵣ eine Ebene durch den ausgewählten Schneidenpunkt, und zwar senkrecht zur angenommenen Schnittrichtung. Die Werkzeug-Bezugsebene Pᵣ ist dabei möglichst so gewählt, daß sie parallel oder senkrecht zu einer Achse des Werkzeuges liegt. Eine Festlegung muß für jeden Werkzeugtyp individuell erfolgen. Bei Drehmeißeln ist die Werkzeug-Bezugsebene Pᵣ eine Ebene parallel zur Auflagefläche des Schaftes bei konventionellen Drehmeißeln, bei Fräswerkzeugen eine Ebene, die die Achse des Fräswerkzeuges enthält.

Die angenommene Arbeitsebene P_{f} ist eine Ebene durch den ausgewählten Schneidenpunkt, senkrecht stehend auf der Werkzeug-Bezugsebene Pᵣ und parallel zur angenommenen Vorschubrichtung.

Die Werkzeug-Rückebene Pₚ ist eine Ebene durch den ausgewählten Schneidenpunkt, senkrecht zur Werkzeug-Bezugsebene Pᵣ und senkrecht zur angenommenen Arbeitsebene P_{f}. Pᵣ, Pₚ und P_{f} stellen somit ein Koordinatensystem durch den angenommenen Schneidenpunkt dar.

Die Werkzeug-Schneidenebene Pₛ (siehe Fig. 8) ist eine Ebene durch den Schneidenpunkt, tangential zur Schneide S und senkrecht zur Werkzeugs-Bezugsebene Pᵣ. Wenn die Werkzeugschneide S rechtwinklig zur Vorschubrichtung liegt, fallen Werkzeug-Schneidenebene Pₛ und Werkzeug-Rückebene Pₚ zusammen.

Die Werkzeug-Orthogonalebene P₀ ist eine Ebene durch den Schneidenpunkt, senkrecht zur Werkzeug-Bezugsebene Pᵣ und senkrecht zur Werkzeug-Schneidenebene Pₛ. Wenn somit die Werkzeugschneide S rechtwinklig zur Vorschubrichtung liegt, fallen Werkzeug-Orthogonalebene P₀ und angenommene Arbeitsebene P_{f} zusammen.

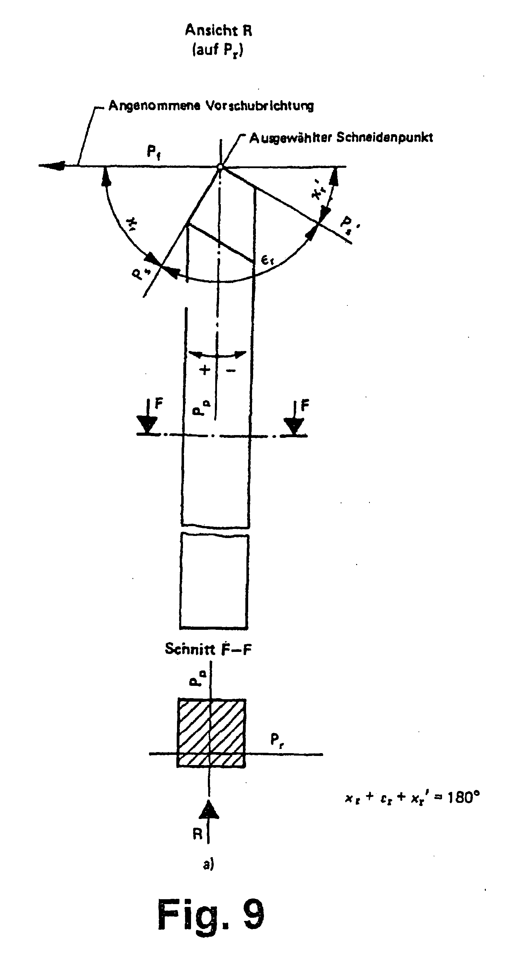

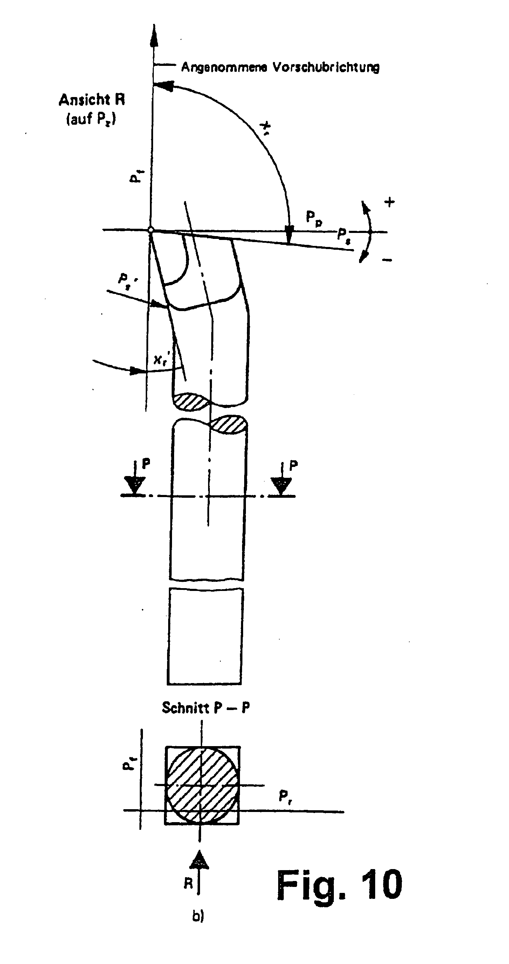

Aus den Figuren 9 und 10 ist - getrennt für das Längsdrehen und das Plandrehen - die Orientierung der einzelnen Werkzeugschneiden zum Werkstück besser ersichtlich. In dieser Aufsicht betrachtet hat das Werkzeug an seiner Schneidenspitze einen Werkzeug-Eckenwinkel εᵣ zwischen der Werkzeug-Schneidenebene Pₛ der Hauptschneide und der Werkzeug-Schneidenebene P'ₛ der Nebenschneide, gemessen in der Werkzeug-Bezugsebene Pᵣ.

Dabei steht die Hauptschneide in einem Werkzeug-Einstellwinkel κᵣ zwischen der Werkzeug-Schneidenebene Pₛ und der angenommenen Arbeitsebene P_{f} gemessen in der Werkzeug-Bezugsebene Pᵣ.

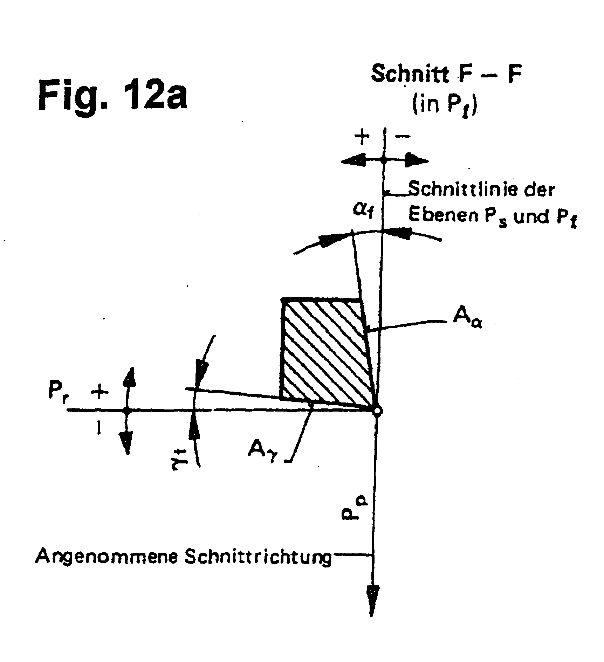

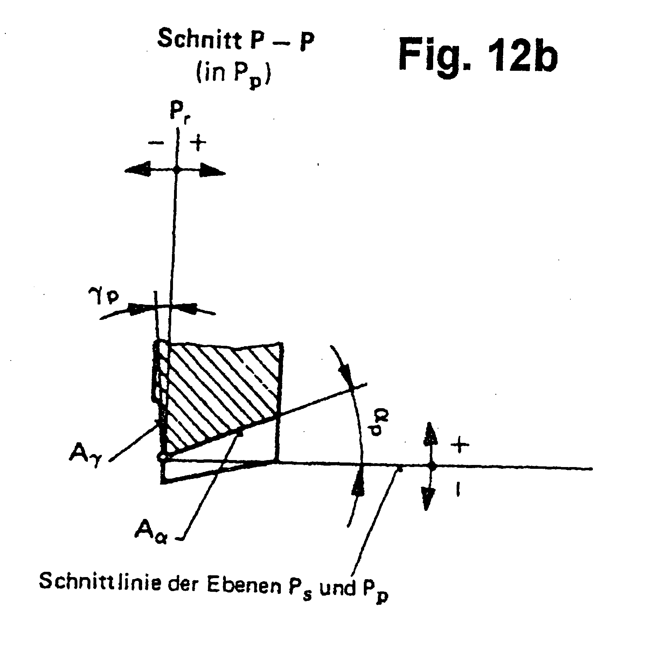

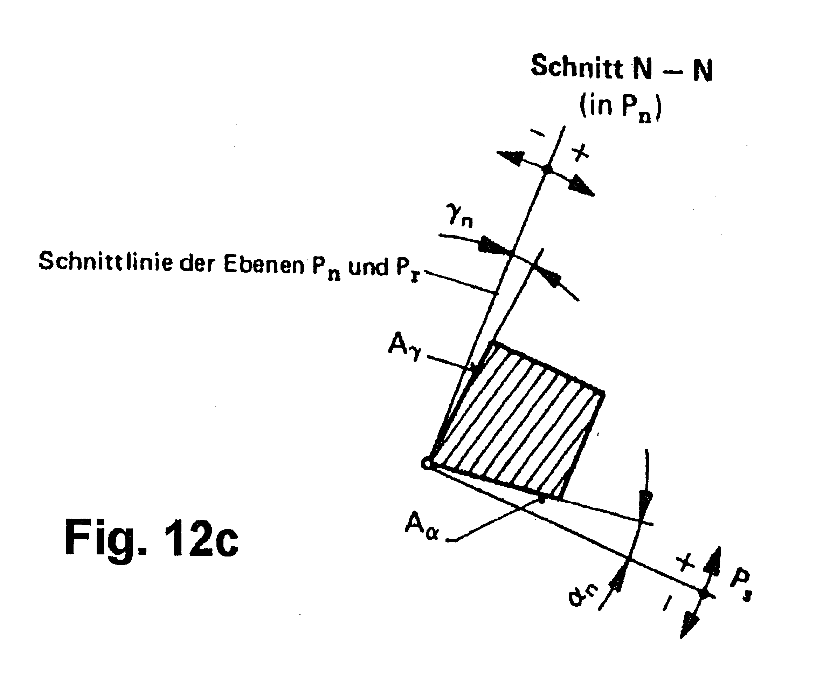

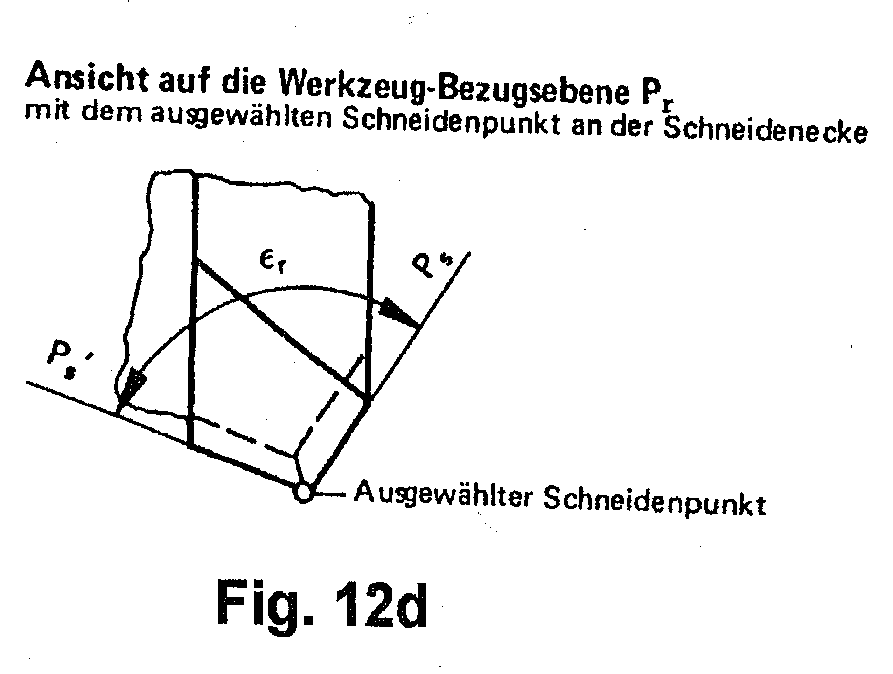

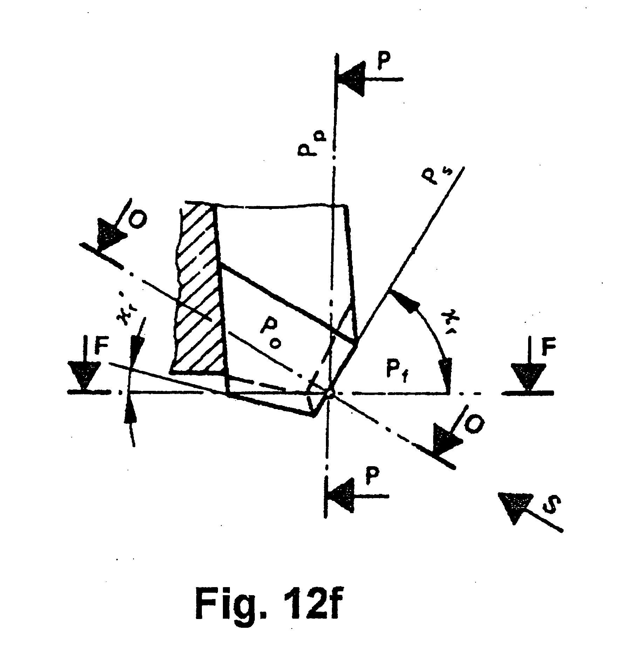

In den Figuren 12a - 12f ist die Lage der einzelnen Schnitte und Ansichten zum Teil aus den Figuren 9 und 10 direkt entnehmbar.

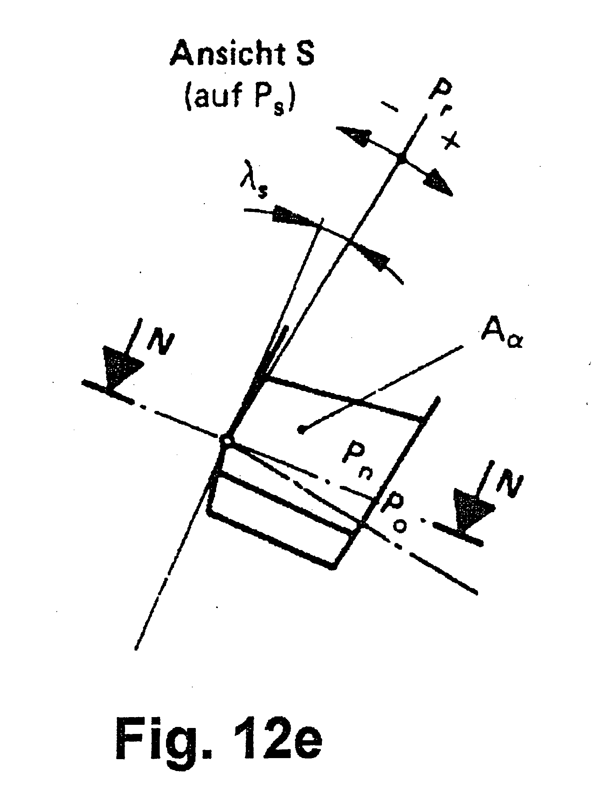

Die relevanten Winkel dabei sind:
- Werkzeug-Seitenspanwinkel γ_{f}: Winkel zwischen der Spanfläche A_{γ} und der Werkzeug-Bezugsfläche Pᵣ, gemessen in der Arbeitsebene P_{f};
- Werkzeug-Rückspanwinkel γₚ: Winkel zwischen der Spanfläche A_{γ} und der Werkzeug-Bezugsebene Pᵣ, gemessen in der Werkzeug-Rückebene Pₚ;
- Werkzeug-Normalspanwinkel γₙ: Winkel zwischen der Spanfläche A_{γ} und der Werkzeug-Bezugsebene Pᵣ, gemessen in der Werkzeug-Schneidennormalebene Pₙ; Der Wert dieses Winkels γₙ (positiv oder negativ) wird verallgemeinert meist als "positive/negative Schneidengeometrie" bezeichnet.
- Werkzeug-Neigungswinkel λₛ (Fig. 12e): Winkel zwischen der Schneide S und der Werkzeug-Bezugsebene Pᵣ, gemessen in der Werkzeug-Schneidenebene Pₛ.

Dieser Werkzeug-Neigungswinkel λₛ ist ein spitzer Winkel, dessen Spitze zur Schneidenecke hinweist. Er ist positiv, wenn die von der Schneidenecke aus zu betrachtende Schneide auf der der angenommenen Schnittrichtung abgekehrten Seite der Werkzeug-Bezugsebene Pᵣ liegt.

Mit α wird generell der Freiwinkel einer Schneide bezeichnet.

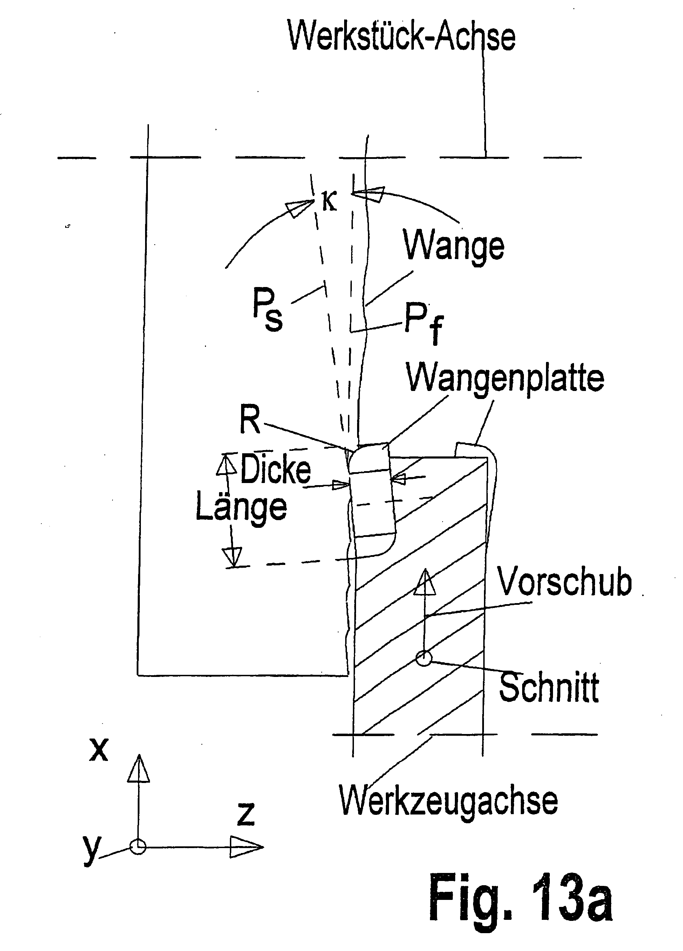

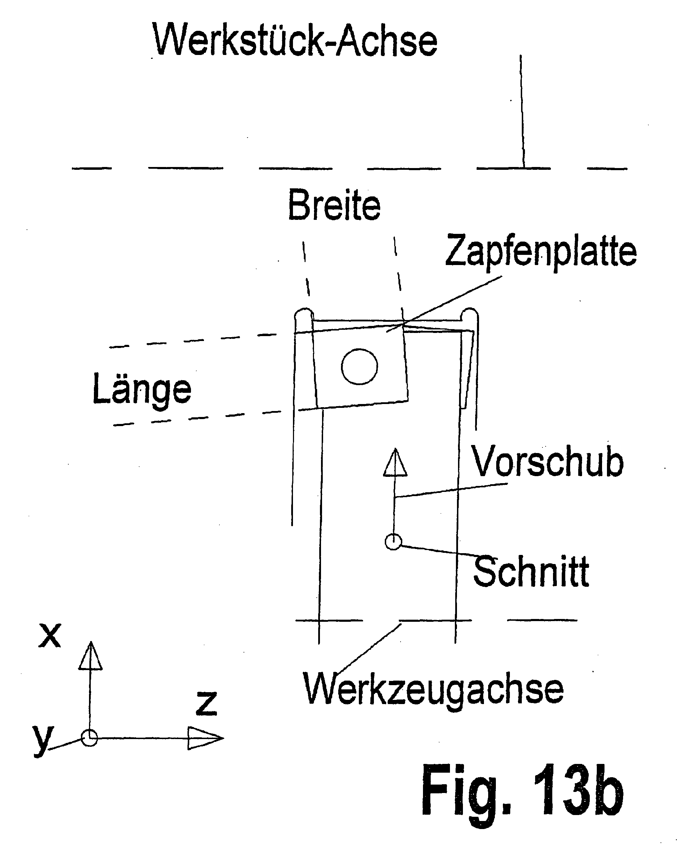

Fig. 13 zeigt eine Wangenplatte, die auf den scheibenförmigen Grundkörper des Fräsers - vorzugsweise beiderseits - stirnseitig aufgeschraubt ist, und dabei sowohl radial als auch stirnseitig über den Grundkörper übersteht. Um von der Stirnfläche der Wange das Material abzutragen, wird bei rotierendem Fräser dieser in X-Richtung, also radial zum Werkstück, als Vorschubrichtung vorwärts bewegt. Dabei steht die plättchenförmige Wangenplatte mit ihrer Ebene, der Werkzeug-Schneidenebene Pₛ im kleinen Winkel κ zur Arbeitsebene P_{f}, die sich aus der Vorschubrichtung (X-Richtung) und der in der X-Y-Ebene liegenden Schnittrichtung zusammensetzt. Dadurch ragt die äußerste, mit dem Eckenradius R von etwa 1,6 mm gerundete Kante des Schneidplättchens vom Grundkörper schräg nach außen und bildet den axial am weitesten vorstehenden Punkt gegenüber dem Grundkörper des Fräsers.

Je größer der Winkel κ ist, um so wellenförmiger wird die bearbeitete Stirnfläche der Wange, wie an dem bereits bearbeiteten Teil in Fig. 13 zu erkennen.

Um die gesamte Stirnfläche einer Wange bearbeiten zu können, ist neben dem in Fig. 13a dargestellten Vorschub in X-Richtung des Fräsers zusätzlich ggf. eine zusätzliche Drehung der Kurbelwelle notwendig, wenn beispielsweise die Wangenfläche bis an den Hublagerzapfen H₂ heran und um diesen herum bearbeitet werden soll.

Bei einer Wangenplatte wie in Fig. 13a dargestellt, wird als Länge der Schneidplatte die Ausdehnung der Platte in radialer Richtung des Fräsergrundkörpers, als Breite die Ausdehnung in tangentialer Richtung des scheibenförmigen Werkzeuggrundkörpers und als Dicke die Ausdehnung in der der axialen Richtung nächstkommenden Richtung des Schneidplättchens bezeichnet.

Fig. 13b zeigt in gleicher Blickrichtung wie Fig. 13a die Bearbeitung der Mantelfläche eines Zapfens der Kurbelwelle durch eine Zapfenplatte. Bei einer derartigen Platte sind als Länge und Breite die in der Aufsicht der Fig. 13b ersichtlichen Seiten gemeint, wobei als Zapfenplatten in der Regel quadratische Wendeschneidplatten verwendet werden, die somit vierfach hintereinander eingesetzt werden können.

Die Zapfenplatten können dabei mit ihrer außen liegenden, schneidenden Kante in einem geringen Winkel abweichend von der Z-Richtung innerhalb der Z-X-Ebene am Grundkörper des Scheibenfräsers befestigt sein, wenn gleichzeitig auch eine Abweichung von der Z-Richtung innerhalb der Z-Y-Ebene gegeben ist.

## Patentansprüche

1. 1O) Verfahren zum spanenden Bearbeiten von exzentrischen und zentrischen Stirnflächen und ebensolchen Umfangs- bzw. Mantelflächen an einem definiert drehbar (C-Achse) auf der zentrischen Achse (Z1-Achse) gespannten Werkstück (WST) in Form einer Kurbelwelle, wobei
1a) das spanende Bearbeiten mittels Außenfräsen geschieht,
1b) das Werkstück (WST) an mehreren, in ihrer Drehlage bezüglich der zentrischen Achse (Z1) nicht übereinstimmenden Hublagerzapfen als Bearbeitungsflächen gleichzeitig bearbeitet wird und
1c) jede Bearbeitungsfläche durch einen separaten Außen-Fräser (WZ1, WZ2,...) bearbeitet wird, welcher jeweils nur in einer Bewegungsbahn quer zum Werkstück (WST) bewegbar ist,
1d) die Drehung des Werkstückes (WST) hinsichtlich Drehlage, Drehzahl (nWST) und Drehrichtung unter Berücksichtigung der momentanen Querbewegurigen und Drehzahlen aller verschiedenen Fräser (WZ1, WZ2,...) geregelt wird und
1e) Querbewegung und Drehzahl (n1, n2, ...) jeder der Fräser (WZ1, WZ2) separat und unabhängig von den anderen Fräser (WZ1, WZ2) aufgrund der Bewegung des Werkstückes (WST) gesteuert wird.

2. Verfahren nach Anspruch 1,
**dadurch gekennzeichnet, daß**
die Bewegungsbahn der Fräser (WZ1, WZ2) eine lineare Bewegungsbahn in X-Richtung ist.

3. Verfahren nach Anspruch 1,
**dadurch gekennzeichnet, daß**
die Bewegungsbahn der Fräser (WZ1, WZ2) quer zum Werkstück eine bogenförmige Schwenkbewegung um eine Z-Achse ist.

4. Verfahren nach einem der vorhergehenden Ansprüche,
**dadurch gekennzeichnet, daß**
die Querbewegung und Drehzahl (n1, n2) der Fräser (WZ1, WZ2) aufgrund der Soll-Bewegung des Werkstückes gesteuert wird.

5. Verfahren nach Anspruch 1 bis 3,
**dadurch gekennzeichnet, daß**
die Querbewegung und Drehzahl (n1, n2) der Fräser (WZ1, WZ2) aufgrund der aktuellen Ist-Bewegung des Werkstückes gesteuert wird.

6. Verfahren nach einem der vorhergehenden Ansprüche,
**dadurch gekennzeichnet, daß**
die Drehung des Werkstückes als auch die Querbewegung und Drehung jedes Fräsers (WZ1, WZ2) für jede Phase des Fräsvorganges vorab berechnet und die Bearbeitung nach dem sich daraus ergebenden Bearbeitungsprogramm durchgeführt wird.

7. Verfahren nach einem der vorhergehenden Ansprüche,
**dadurch gekennzeichnet, daß**
die Optimierung der Bewegungsparameter von Werkstück und den gleichzeitig arbeitenden Fräsern im Hinblick auf die Einhaltung einer maximalen mittleren Spandicke (hₘᵢₜₜ) erfolgt.

8. Verfahren nach Anspruch 1 bis 6,
**dadurch gekennzeichnet, daß**
die Optimierung der Bewegungsparameter von Werkstück und den gleichzeitig arbeitenden Fräsern im Hinblick auf die Einhaltung einer Maximal-Spandicke (hₘₐₓ) erfolgt.

9. Verfahren nach Anspruch 1 bis 6,
**dadurch gekennzeichnet, daß**
die Optimierung der Bewegungsparameter von Werkstück und den gleichzeitig arbeitenden Fräsern im Hinblick auf eine Maximierung der Schnittgeschwindigkeiten (vₛ₁ bzw. vₛ₂) erfolgt.

10. Verfahren nach einem der vorhergehenden Ansprüche,
**dadurch gekennzeichnet, daß**
die Optimierung der Bewegungsparameter von Werkstück und den gleichzeitig arbeitenden Fräsern im Hinblick auf Einhaltung eines bestimmten Wertebereiches für die mittlere oder maximale Spandicke (hₘᵢₜₜ), insbesondere die Einhaltung einer exakten mittleren Spandicke (h_{mitt 0}), insbesondere an allen gleichzeitig arbeitenden Fräsern (WZ1, WZ2) erfolgt.

11. Verfahren nach einem der vorhergehenden Ansprüche,
**dadurch gekennzeichnet, daß**
die Optimierung der Bewegungsparameter von Werkstück und den gleichzeitig arbeitenden Fräsern im Hinblick auf Einhaltung eines bestimmten Wertebereiches für die mittlere Spandicke (hₘᵢₜₜ), insbesondere die Einhaltung einer exakten mittleren Spandicke (h_{mitt 0}), insbesondere an allen gleichzeitig arbeitenden Fräs-Units (U1, U2) als primäres Optimierungsziel und die Erzielung einer möglichst hohen Schnittgeschwindigkeit an jedem der Fräser (WZ1, WZ2) als sekundäres Optimierungsziel erfolgt.

12. Verfahren nach einem der vorhergehenden Ansprüche,
**dadurch gekennzeichnet, daß**
es sich bei dem Fräsen um Hochgeschwindigkeitsfräsen mit Schnittgeschwindigkeiten von 180 - 800, insbesondere 350 - 500 m/min handelt.

13. Verfahren nach einem der vorhergehenden Ansprüche,
**dadurch gekennzeichnet, daß**
der Fräser eine positive Schneidengeometrie aufweist.

14. Verfahren nach einem der vorhergehenden Ansprüche,
**dadurch gekennzeichnet, daß**
es sich bei dem Fräsen um das Fräsen am bereits gehärteten Werkstück handelt.

15. Verfahren nach einem der vorhergehenden Ansprüche,
**dadurch gekennzeichnet, daß**
beim Fräsen eines Lagerzapfens der Fräser im Verlauf einer Einlaufphase von 20° - 100°, insbesondere von 40° - 60° Relativdrehung des zu bearbeitenden Lagerzapfens auf Sollmaß-Querrichtung zugestellt wird.

## Claims

1. Method for machining eccentric and centric end faces and exactly such circumferential or peripheral surfaces on a definedly rotatable (C-axis) workpiece (WST) which is a crank shaft clamped on the centric axis (Z₁-axis), wherein
a) the machining is effected by means of external milling,
b) the workpiece (WST) is simultaneously machined at a plurality of crank pin bearings as machining surfaces, which do not correspond in their rotational position with respect to the centric axis (Z₁), and
c) each machining surface is machined by a separate external milling cutter (WZ1, WZ2,...) which is each movable only in one motion path transversely to the workpiece (WST),
d) the rotation of the workpiece (WST) is adjusted with respect to the rotational position, the rotational speed (n_{WST}) and the rotational direction in consideration of the present transverse movements and rotational speeds of all different milling cutters (WZ1, WZ2,...) and
e) the transverse movement and the rotational speed (n1, n2,...) of each of the milling cutters (WZ1, WZ2) is controlled separately and independently of the other milling cutters (WZ1, WZ2) on the basis of the movement of the workpiece (WST).

2. Method according to claim 1,
**characterized in that**
the motion path of the milling cutters (WZ1, WZ2) is a linear motion path in the X-direction.

3. Method according to claim 1,
**characterized in that**
the motion path of the milling cutters (WZ1, WZ2) transversely to the workpiece is an arc-shaped pivotal movement about a Z-axis.

4. Method according to any one of the preceding claims,
**characterized in that**
the transverse movement and the rotational speed (n1, n2) of the milling cutters (WZ1, WZ2) is controlled on the basis of the desired movement of the workpiece.

5. Method according to claim 1 to 3,
**characterized in that**
the transverse movement and the rotational speed (n1, n2) of the milling cutters (WZ1, WZ2) is controlled on the basis of the actual movement of the workpiece.

6. Method according to any one of the preceding claims,
**characterized in that**
the rotation of the workpiece as well as the transverse movement and the rotation of each milling cutter (WZ1, WZ2) is calculated previously for each phase of the milling operation and that the machining is performed according to the machining program resulting therefrom.

7. Method according to any one of the preceding claims,
**characterized in that**
the optimization of the movement parameters of the workpiece and the simultaneously operating milling cutters occurs with respect to keeping a maximum average depth of cut (hₘᵢₜₜ).

8. Method according to claim 1 to 6,
**characterized in that**
the optimization of the movement parameters of the workpiece and the simultaneously operating milling cutters occurs with respect to keeping a maximum depth of cut (hₘₐₓ).

9. Method according to claim 1 to 6,
**characterized in that**
the optimization of the movement parameters of the workpiece and the simultaneously operating milling cutters occurs with respect to a maximization of the cutting speeds (vₛ₁ and vₛ₂, respectively).

10. Method according to any one of the preceding claims,
**characterized in that**
the optimization of the movement parameters of the workpiece and the simultaneously operating milling cutters occurs with respect to keeping a particular value range for the average or maximum depth of cut (hₘᵢₜₜ), in particular keeping an exact average depth of cut (h_{mitt 0}), in particular at all simultaneously operating milling cutters (WZ1, WZ2).

11. Method according to any one of the preceding claims,
**characterized in that**
the optimization of the movement parameters of the workpiece and the simultaneously operating milling cutters occurs with respect to keeping a particular value range for the average depth of cut (hₘᵢₜₜ), in particular keeping an exact average depth of cut (h_{mitt 0}), in particular at all simultaneously operating milling units (U1, U2) as primary optimization target and the achieving of a highest possible cutting speed at each of the milling cutters (WZ1, WZ2) being the secondary optimization target.

12. Method according to any one of the preceding claims,
**characterized in that**
the milling concerned is a high-speed milling with cutting speeds of 180-800, in particular 350-500 m/min.

13. Method according to any one of the preceding claims,
**characterized in that**
the milling cutter has a positive cutting edge geometry.

14. Method according to any one of the preceding claims,
**characterized in that**
the milling concerned is the milling performed on a previously hardened workpiece.

15. Method according to any one of the preceding claims,
**characterized in that**
during the milling of a bearing pin the milling cutter is fed in the transverse direction of desired measure in the course of a run-in phase of 20° - 100°, in particular of 40° - 60° relative rotation of the bearing pin to be machined.

## Revendications

1. Procédé pour l'usinage par enlèvement de copeaux de surfaces frontales centrées et excentrées respectivement de surface d'enveloppe sur une pièce à usiner (WST) sous la forme de vilebrequin serrée de manière définie et rotative (axe C) sur l'axe centré (axe Z₁), où
a) l'usinage par enlèvement de copeau s'effectue par fraisage par contournage externe,
b) la pièce à usiner (WST) est usinée en même temps sur plusieurs tourillon de bielle comme surfaces d'usinage non concordantes dans leur forme et respectivement dans la position de rotation par rapport à l'axe centré (Z₁) et
c) chaque surface d'usinage est usinée par une fraise pour contournage externe séparée (WZ1, WZ2, ...) qui est respectivement mobile uniquement dans une trajectoire de déplacement transversalement à la pièce à usiner (WST),
d) la rotation de la pièce à usiner (WST) est régulée en fonction de la position de rotation, du nombre de tour (n_{wst}) et du sens de rotation en tenant compte des déplacements transversaux momentanés et des nombres de tours de toutes les fraises différentes (WZ1, WZ2,...) et
e) le déplacement transversal et le nombre de tours (n1, n2,...) de chacune des fraises (WZ1, WZ2,...) sont commandés par rapport au déplacement de l'outil à usiner (WST) indépendamment des autres fraises (WZ1, WZ2).

2. Procédé selon la revendication 1, **caractérisé en ce que** la trajectoire de déplacement des fraises (WZ1, WZ2,...)est une trajectoire de déplacement linéaire dans le sens des X.

3. Procédé selon la revendication 1, **caractérisé en ce que** la trajectoire de déplacement des fraises (WZ1, WZ2,...) est un mouvement pivotant en forme d'arc autour d'un axe Z transversalement à la pièce à usiner.

4. Procédé selon l'une des revendications précédentes, **caractérisé en ce que** le mouvement transversal et le nombre de tours (n1, n2) des fraises (WZ1, WZ2) est commandé sur la base du déplacement théorique de la pièce à usiner.

5. Procédé selon la revendication 1 à 3, **caractérisé en ce que** le déplacement transversal et le nombre de tours (n1, n2) des fraises (WZ1, WZ2) est commandé sur la base du déplacement actuel effectif de la pièce à usiner.

6. Procédé selon l'une des revendications précédentes, **caractérisé en ce que** la rotation de la pièce à usiner ainsi que le déplacement transversal et la rotation de chaque fraise (WZ1, WZ2) sont calculés en avance pour chaque phase de l'étape de fraisage et l'usinage est exécuté selon le programme d'usinage en résultant le programme.

7. Procédé selon l'une des revendications précédentes, **caractérisé en ce que** l'optimisation des paramètres de déplacement de la pièce à usiner et des fraises fonctionnant simultanément s'effectue en tenant compte d'une épaisseur moyenne maximale de copeaux (hₘᵢₜₜ)

8. Procédé selon les revendications 1 à 6, **caractérisé en ce que** l'optimisation des paramètres de déplacement de la pièce à usiner et des fraises fonctionnant simultanément s'effectue en tenant compte d'une épaisseur maximale de copeaux (hₘₐₓ).

9. Procédé selon les revendications 1 à 6, **caractérisé en ce que** l'optimisation des paramètres de déplacement de la pièce à usiner et des fraises fonctionnant simultanément s'effectue en tenant compte d'une maximisation des vitesses de coupe (vₛ₁ respectivement vₛ₂).

10. Procédé selon l'une des revendications précédentes, **caractérisé en ce que** l'optimisation des paramètres de déplacement de la pièce à usiner et des fraises fonctionnant simultanément s'effectue en respectant une plage définie de valeurs pour l'épaisseur moyenne ou maximale de copeaux (hₘᵢₜₜ), en particulier en respectant une épaisseur de copeaux moyenne exacte (h_{mitt 0}), en particulier sur toutes les fraises fonctionnant simultanément (WZ1, WZ2).

11. Procédé selon l'une des revendications précédentes, **caractérisé en ce que** l'optimisation des paramètres de déplacement de la pièce à usiner et des fraises fonctionnant simultanément s'effectue en respectant une plage définie de valeurs pour l'épaisseur moyenne de copeaux (hₘᵢₜₜ), en particulier en respectant une épaisseur de copeaux moyenne exacte (h_{mitt 0}), en particulier sur toutes les unités de fraises (U1, U2) fonctionnant simultanément en tant qu'objectif primaire d'optimisation et l'atteinte d'une vitesse de coupe la plus élevée possible sur chacune des fraises (WZ1, WZ2) en tant qu'objectif secondaire.

12. Procédé selon l'une des revendications précédentes, **caractérisé en ce qu'**il s'agit d'un fraisage avec des fraises à grande vitesse avec des vitesses de coupe de 180 - 800 en particulier de 350 à 500 m/min.

13. Procédé selon l'une des revendications précédentes, **caractérisé en ce que** la fraise présente une géométrie positive de coupe.

14. Procédé selon l'une des revendications précédentes, **caractérisé en ce qu'**il s'agit d'un fraisage sur des pièces à usiner déjà trempées.

15. Procédé selon l'une des revendications précédentes, **caractérisé en ce que** pour le fraisage d'un tourillon, la fraise est approchée sur la direction transversale théorique au cours d'une phase d'amorce de rotation relative de 20° à 100° en particulier de 40° à 60° du tourillon à usiner.
